# FASCICULE DE BREVET EUROPEEN

(11) **EP 1 140 416 B1**
(45) Date de publication et mention de la délivrance du brevet: **04.12.2002**
(21) Numéro de dépôt: 99961143.7
(22) Date de dépôt: 22.12.1999
(51) Int. Cl.: B23K 35/32, B23K 35/30

(54) **COMPOSITION DE BRASURE ET PROCEDE DE BRASAGE DE PIECES EN MATERIAUX A BASE D'ALUMINE AVEC LADITE COMPOSITION**
HARTLÖTZUSAMMENSETZUNG UND VERFAHREN ZUM HARTLÖTEN VON MATERIALIEN AUF ALUMINIUMOXYD-BASIS MIT DIESER ZUSAMMENSETZUNG
BRAZING COMPOSITION AND METHOD FOR BRAZING PARTS MADE OF ALUMINA-BASED MATERIALS WITH SAID COMPOSITION

(30) Priorité: 23.12.1998 FR 9816318
(43) Date de publication de la demande: 10.10.2001
(73) Titulaire: COMMISSARIAT A L'ENERGIE ATOMIQUE, 75752 Paris Cédex 15 (FR)
(72) Inventeur: GASSE, Adrien, F-38000 Grenoble (FR); EUSTATHOPOULOS, Nicolas, F-38100 Grenoble (FR)
(74) Mandataire: Audier, Philippe André
(86) Numéro de dépôt international: FR9903251
(87) Numéro de publication internationale: WO00038875

(56) Documents cités:
- DE-A- 1 671 265
- FR-A- 1 269 389
- US-A- 3 519 418
- US-A- 4 780 374
- US-A- 5 340 014
- A.J. MOORHEAD: "Direct Brazing of Alumina Ceramics" ADVANCED CERAMIC MATERIALS., vol. 2, no. 2, 1987, pages 159-166, XP002113278 AMERICAN CERAMIC SOCIETY. COLOMBUS, OHIO., US cité dans la demande

## Description

La présente invention est relative à une composition de brasure, et à un procédé d'assemblage de pièces en matériaux à base d'alumine avec elles-mêmes ou avec des pièces en métal ou en alliage métallique par brasage réfractaire réactif ou non-réactif, avec ladite composition de brasure, afin de réaliser des assemblages entièrement en alumine ou comprenant de l'alumine et un métal ou alliage métallique.

L'invention a également trait au joint réfractaire et à l'assemblage ainsi obtenus.

Par matériaux « à base d'alumine », on entend généralement tous les matériaux dont la teneur en alumine est généralement supérieure ou égale à 90 % en poids, ces matériaux comprenant également les composites à base d'alumine.

Le domaine technique de l'invention peut être défini comme étant le brasage à haute température, c'est-à-dire qu'il met en oeuvre des températures généralement supérieures à 1 200°C, ce qui permet l'utilisation de l'assemblage obtenu dans des applications nécessitant des montées en température pouvant dépasser par exemple 900°C et jusqu'à 1 600°C et même au-delà.

On sait qu'il est difficile de fabriquer des pièces de grandes dimensions en céramique, en particulier, en Al₂O₃. En effet, les tolérances après frittage des composants primaires en alumine de grandes dimensions sont mal maîtrisées et l'usinage de ces composants est inacceptable pour des raisons de coût.

Par ailleurs, et pour les mêmes raisons, il est généralement difficile de fabriquer des pièces de forme complexe avec des céramiques de type oxyde telle que l'alumine.

Il est donc souvent préférable de fabriquer les pièces ou structures de grande dimension et/ou de forme complexe à partir d'éléments en céramiques de forme simple et/ou de petite taille, puis d'assembler ces éléments pour réaliser la structure finale.

Du fait des températures élevées, voisines par exemple de 1 000°C, mises en oeuvre dans les applications des céramiques telles que l'alumine, l'assemblage de ces céramiques par collage avec des produits organiques est exclu puisque ces produits ne supportent pas des températures supérieures à 200°C.

D'autre part, les techniques classiques d'assemblage par soudage faisant intervenir un faisceau d'énergie avec ou sans métal d'apport (soudage TIG, par faisceau d'électron ou laser) et impliquant une fusion partielle des parties à assembler sont inutilisables pour l'assemblage de céramiques du fait qu'on ne peut pas faire fondre directement un substrat ou une pièce en céramique sans le détruire, celui-ci pouvant se décomposer avant fusion.

En conséquence, le soudage par diffusion en phase solide, l'assemblage-frittage, et le brasage réactif sont actuellement les techniques les plus courantes pour réaliser des assemblages réfractaires de céramiques.

Le soudage par diffusion en phase solide ainsi que l'assemblage-frittage présentent le désavantage d'être contraignants du point de vue de leur mise en oeuvre.

Pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud). Cette technique n'est donc pas viable économiquement.

Dans le cas de l'assemblage-frittage, les mêmes problèmes demeurent (forme des pièces, complexité de mise en oeuvre) avec en plus la nécessité de contrôler le frittage d'une poudre d'apport à intercaler entre les deux matériaux à assembler.

Ces deux techniques nécessitent en outre l'utilisation de paliers ou cycles de longue durée (une à plusieurs heures) à haute température puisque les processus mis en jeu font intervenir la diffusion à l'état solide, ce qui pourrait, par ailleurs, favoriser, dans le cas du mélange diffusion, le grossissement des grains des alliages métalliques si on réalise un assemblage métal-céramique.

Le brasage est une technique peu coûteuse, facile de mise en oeuvre, qui est la plus couramment utilisée. Des pièces de forme complexe peuvent être réalisées en faisant du brasage capillaire et les opérations se limitent à placer le métal d'apport ou alliage, appelé « brasure », entre ou à proximité des pièces à assembler et à faire fondre la brasure pour obtenir, après refroidissement, la jonction des deux pièces.

Le brasage des céramiques doit surmonter le problème fondamental de la mauvaise mouillabilité des céramiques par les métaux. En effet, les compositions de brasure habituelles qui sont composées de métaux à bas point de fusion, tels que l'argent, le cuivre, l'or et leurs alliages ne mouillent pas les céramiques, bien qu'elles mouillent les matériaux métalliques. Ce problème est surmonté en procédant à un traitement de surface préalablement au brasage, en sélectionnant des compositions d'alliages particulières et/ou en ajoutant éventuellement un élément réactif, comme c'est le cas du brasage, dit « brasage réactif ».

Dans cette dernière technique, on utilise une composition d'alliage métallique, le plus souvent à base de cuivre et d'argent et on ajoute un élément réactif tel que Ti, Zr, V, Hf, Nb.....

L'élément réactif agit par décomposition de la surface de la céramique et réaction avec celle-ci pour former un composé très stable de nitrure, oxyde, siliciure ou carbure selon la nature de la céramique en jeu. Cette couche permet généralement un très bon mouillage de la céramique et une adhérence satisfaisante avec celle-ci.

Si l'on s'intéresse plus particulièrement aux céramiques oxydes, celles-ci, et notamment l'alumine sont très peu réactives, et par conséquent, mis à part les éléments chimiques très réactifs, tels que le Ti, le Zr et le Hf, la plupart des éléments métalliques de transition ne mouillent pas et n'adhèrent pas sur une surface d'alumine, c'est le cas notamment des éléments Ni, Fe, Cu, Mn, Co, Pt, Au, Ag, Pd, etc.

Il est donc généralement nécessaire de réaliser un traitement de surface afin de métalliser l'alumine avant de la braser, c'est-à-dire que l'on dépose une fine couche métallique fortement adhérente sur la céramique qui agira comme interface entre la brasure et la céramique.

Le procédé le plus couramment utilisé pour métalliser les céramiques à base de manganèse est le procédé, dit moly-manganèse dans lequel une suspension ou pâte contenant un mélange pulvérulent de mobybdène et de manganèse est appliquée sur la céramique et recuite dans une atmosphère humide réductrice d'hydrogène ou d'ammoniac. Une telle atmosphère réductrice est nécessaire pour maintenir le molybdène à l'état de métal, tandis qu'une certaine teneur en vapeur d'eau permet d'oxyder le manganèse métallique.

Bien que ce procédé fonctionne relativement bien avec des céramiques à 94 - 96 % d'alumine, il n'est pas applicable à des céramiques à 99,5 % d'alumine, c'est la raison pour laquelle il est décrit dans le document de K. WHITE, D. KRAMER, Materials Science and Engineering, 75 (1985) 207-213, « Microstructure and seal strengh relation in the molybdenum-manganese glass metallization of alumina ceramics », l'addition de verres de manganèse (Mno - SiO₂ - Al₂O₃) à la poudre de molybdène à la place du métal pur.

Le verre qui se forme lors du recuit à une température de 1 500°C pénètre dans les joints de grain de la céramique et crée une matrice vitreuse dans laquelle les particules métalliques sont piégées, ce qui favorise la métallisation.

Le dépôt est ensuite métallisé par électrolyse avec une couche de nickel ou de palladium et on réalise enfin le brasage, proprement dit, à l'aide d'une composition de brasure à base d'argent.

Ce procédé est complexe et lourd à mettre en oeuvre en raison de l'utilisation d'une atmosphère réductrice hydrogénée et du fait qu'il comporte quatre étapes successives.

Une deuxième technique qui est celle du brasage réactif consiste, de manière générale, à faire réagir la surface de l'alumine avec un élément très réactif choisi, par exemple, parmi Ti, Zr et Hf, Nb, Al et Cr.

Le brasage réactif est adapté à l'assemblage de céramiques oxydes tel que l'alumine, car la réactivité est limitée et le comportement mécanique des oxydes formés satisfaisant.

Cette deuxième technique comporte elle-même plusieurs variantes parmi lesquelles on mentionnera, d'une part, le brasage réactif indirect et, d'autre part, le brasage réactif direct.

Dans le brasage indirect (qui se rapproche de la technique de métallisation), on dépose préalablement sur l'alumine une couche de métal réactif tel que le titane, soit sous forme d'une couche métallique réalisée par PVD (dépôt physique en phase vapeur) ou CVD (dépôt chimique en phase vapeur), soit sous forme d'hydrure de titane.

Le brasage indirect est une méthode coûteuse et difficile à mettre en oeuvre car elle nécessite deux étapes, de plus la manipulation de l'hydrure de titane est délicate car ce produit est très instable, enfin le brasage est réalisé à des températures généralement inférieures à 950°C et la température de fonctionnement des assemblages ne dépasse pas 400°C.

Dans le brasage direct, on utilise une composition de brasure contenant déjà les éléments réactifs associés à une matrice formé d'un métal de brasure classique.

Ainsi le document EP-A-0 135 603 (GTE Products Corporation) décrit-il un alliage ductile pour le brasage, par exemple d'une pièce en céramique et d'une pièce en alliage métallique comprenant de 0,25 % à 4 % d'un métal réactif choisi parmi le titane, le vanadium, le zirconium et leurs mélanges, de 20 à 85 % d'argent, de 1 à 70 % de cuivre ou d'aluminium, et de 3 à 30 % de palladium.

La brasure décrite dans ce document a une température de liquidus d'environ 600 à 950°C, ce qui correspond à une température de fonctionnement aussi basse que 400°C nettement insuffisante pour des applications à hautes températures voisines de 1 000°C ou plus, par exemple, jusqu'à 1 600°C.

En outre, comme cela est montré dans le document de M. G. NICHOLAS, reactive Metal Brazing, Joining Ceramics Glass and Metals, Ed. by W. KRAFT, 1989, Bad Nauheim (Germany), pp. 3-16, les compositions de brasure comprenant des métaux de brasure classiques, ainsi que des éléments choisis parmi Al, Cr, Hf, Nb, Ti et Zr pour favoriser la mouillabilité des céramiques, telles que Al₂O₃, doivent répondre à de nombreux critères très exigeants liés au fait qu'il est primordial lors de la réalisation d'un assemblage de céramiques entre elles, ou avec un métal, de limiter les contraintes résiduelles qui se développent lors du refroidissement, dues à un différentiel de coefficient de dilatation thermique entre les deux parties à assembler si leur nature est différente, mais également entre la céramique et la brasure dans le cas d'un assemblage de deux céramiques de même nature.

En conséquence, le coefficient de dilatation de la brasure doit correspondre étroitement à celui des pièces en céramique à assembler. Or, les brasures comprenant un métal actif, par exemple, celles obtenues par inclusion de titane dans un alliage eutectique Cu - Ag, sont plus dures et moins ductiles que les brasures en métaux classiques.

Par ailleurs, les brasures comprenant des métaux actifs pouvant ne pas s'écouler aussi facilement que les alliages de brasage classique.

Enfin, dans tous les procédés de brasage réactif, le contrôle de la réactivité est primordial, car un excès de réactivité nuit à la tenue des assemblages et ce type de composition de brasure utilise des éléments fortement oxydables, qui, aux températures moyennes d'assemblage obligent à travailler sous un vide poussé ou sous gaz réducteur.

Des nombreuses compositions de brasure réactive ont été proposées. Ainsi, le document US-A-5 351 938 décrit il des alliages ternaires pour brasure réactive contenant 70 à 85 at % de zirconium, de 15 à 30 at % de Ni, ainsi que du titane dans le cas du brasage à basse température (« soldering » en anglais). Les céramiques assemblées sont des céramiques de type oxyde, telles que Al₂O₃.

La forte réactivité du Ti et du Zr sur l'alumine oblige à contrôler très sévèrement le cycle de brasage pour éviter la formation d'une couche réactive épaisse dommageable à la tenue mécanique de l'assemblage.

Le document DE-A-16 71 265 divulgue une composition de brasure constituée de 50 à 65 % Ti, 20 à 35 % Ni et 5 à 30 % parmi un ou plusieurs métaux du groupe Nb, V, Mo, W, Cr, Al, Fe, Zr et Mg.

Le document JP-A-02 088 482 décrit un procédé pour métalliser ou assembler des céramiques, notamment Al₂O₃ avec des compositions de brasage (« solder » en anglais) basés sur un alliage comprenant au moins un métal choisi parmi Ag, Cu, Ni, Al et Mn, additionné de Ti et/ou de Zr. La métallisation ou l'assemblage est réalisée sous une pression réduite de gaz inerte ou d'azote ou d'un mélange de ceux-ci. La composition de brasage comprend, en outre, au moins un métal choisi parmi In, Sn, Zn et Bi, ces derniers éléments sont réputés peu réfractaires, et sont des fondants utilisés pour diminuer le point de fusion de l'alliage. Les alliages décrits dans ce document sont donc tout à fait inadaptés au brasage réfractaire de l'alumine et vont donc à l'encontre de ce qui est recherché.

Le document JP-A-01 183477 propose d'assembler des pièces en métal et des pièces en céramique par formation d'une couche mince de métal sur la surface à assembler de la pièce en céramique, par exemple en Al₂O₃. Le métal déposé par plaquage ionique est soit de l'aluminium, soit du titane, soit du nickel. On réalise ensuite le brasage par fusion du métal.

Cette technique oblige à réaliser un dépôt de couche mince et utilise un seul métal. Avec de l'Al pur, la réfractarité de l'assemblage est limitée à 660 °C ; avec du Ti pur, et à la température de fusion de celui-ci, il est très difficile de contrôler la réactivité du fait de la très forte réactivité du titane avec l'alumine ; enfin, il est connu que le Ni pur ne mouille pas l'alumine comme on l'a indiqué ci-dessus, ce qui va conduire à de nombreuses porosités dans le joint et va nuire à l'étanchéité et à la tenue mécanique de l'assemblage.

Le document JP-A-61 178477 est relatif à une composition de métallisation de céramiques, telles que Si₃N₄, SiC ou l'alumine qui comprend un hydrure de titane (2 à 50 % en poids) et de l'aluminium (50 à 98 % en poids).

D'une part, la métallisation requiert l'application d'une pression importante, ce qui est économiquement inacceptable avec les contraintes que cela impose et, d'autre part, l'utilisation d'un hydrure pose le problème de sa stabilité et de sa manipulation délicate. La très forte proportion d'Al confère de plus à l'alliage une réfractarité médiocre puisqu'il est proposé d'assembler la céramique métallisée à de l'Al pur.

Le document FR-A-2 584 391 décrit un procédé d'assemblage de métaux et de céramiques, telles que l'alumine à eux-mêmes et les uns aux autres qui consiste à disposer entre les pièces à assembler une composition de brasure constituée d'un aluminure de trinickel AlNi₃ (23 à 25 at % d'Al) et à porter l'assemblage à une température de 1 450 à 1 550°C dans des conditions non oxydantes.

Ce procédé est très sensible à l'oxygène, comme le montre la dispersion des résultats. Si l'ajout de C permet d'obtenir une meilleure reproductibilité, il nécessite l'emploi d'un excellent vide ou d'une atmosphère de très haute pureté. De plus, il est connu que le tri-aluminure de Ni n'adhère pas à l'alumine, comme cela est indiqué dans le document de J. A. CHAMPION, B. J. KEENE, S. ALLEN, Wetting of refractory materials by molten metallides, Journal of Materials Science 8 (1973) 423-426, qui étudie la mouillabilité de céramiques, telles que Al₂O₃, SiC, Si₃N₄ et BN par divers composés intermétalliques, tels que TiAl₃, TiSi₂, TiNi, TiNi₃, TiCr₂, Cr₃Si₂, Fe₂Al₅, FeSi, Fe₂Si₅, CoSi, « CoSi₃ », Ni₂Si et Nc₃Al, par le silicium et par un alliage de nickel, et montre que l'alumine ne réagit pas et n'est pas mouillée par les siliciures, le silicium et les aluminures. Il est confirmé que seuls les composés comprenant du titane mouillent l'alumine dans une certaine mesure.

Le document de A. J. MOORHEAD, « Direct Brazing of Alumina Ceramics », Advanced Ceramic Materials, 2[2] 159-66 concerne des compositions de brasure actives, Ni - 25 Al, Ni - 19 Al - 4 Ti - 0,2 B et Ni - 14 Al - 10 Ti - 0,2 B dont la mouillabilité n'est pas satisfaisante, tandis que la résistance de la liaison est dans tous les cas très faible ou nulle.

Il ressort de ce qui précède que le comportement des compositions de brasure sur l'alumine en termes de mouillabilité et d'adhérence est difficilement prévisible.

Même si l'utilisation d'un élément d'addition tel que le Ti est largement répandue pour l'élaboration de brasures pour l'alumine, les documents cités plus haut montrent clairement que de nombreuses compositions sont inadaptées sans qu'il soit possible, au préalable, de le prévoir.

Cela est confirmé par le document de M. G. NICHOLAS, T. M. VALENTINE, M. J. WAITE, The wetting of alumina by copper alloyed with titanium and other elements, Journal of Materials Science 15 (1980) 2 197 - 2 206, qui étudie la mouillabilité de l'alumine par des alliages ternaires de cuivre, titane et aluminium, gallium, or, indium, nickel, ou argent.

Les additions de titane permettent au cuivre de mouiller l'alumine à cause de la formation d'un produit de réaction riche en titane à l'interface céramique-alliage. Des additions d'indium sont très bénéfiques, des additions d'Al, d'or et d'argent moyennement bénéfiques et des additions de gallium ou de nickel apportent peu ou pas d'avantages.

Ce document démontre la compréhension imprécise- des mécanismes par lesquels les éléments. d'addition ternaires influencent le comportement de mouillage.

En outre, le mouillage n'est qu'un des critères à remplir pour qu'une brasure soit considérée comme satisfaisante, il en est bien d'autres parmi lesquels on peut citer la formation d'une forte interface entre la céramique et la brasure solidifiée. En effet, les propriétés de mouillage et d'adhérence dépendent fortement de la nature et de l'épaisseur du produit de réaction à l'interface entre la brasure et l'alumine. Les interactions mises en jeu sont complexes et difficilement prévisibles dans le cas d'alliage binaires et impossibles à prévoir dans le cas d'alliages ternaires.

Le document US-A-5 340 014 décrit un procédé d'assemblage ou de revêtement de pièces en métaux ou en céramiques à l'aide d'une suspension comprenant au moins deux éléments choisis parmi les suivants : TiO₂, B₂O₃, Al, Si, Ti, B, Ni, P, Cr₂O₃, C, NB, Zr, Ta, Mo, Hf et V. Dans le cas de l'assemblage, les éléments sont choisis dans le groupe constitué de TiO₂, B₂O₃, Al, Ti, B, Ni et P ; Ti et B ; Ti, B, Ni et P ; Cr₂O₃, C et Al. Une fois la suspension appliquée sur les surfaces à assembler, on l'enflamme de manière à provoquer une réaction exothermique par combustion. Les éléments doivent donc être choisis de manière à produire une telle réaction.

Les compositions décrites plus précisément concernent exclusivement le revêtement et non l'assemblage des céramiques et contiennent de 60 à 68 % de titane et 32 à 40 % d'aluminium (exemples 1 à 5), l'exemple 2 a trait à une suspension contenant 64 % de titane et 36 % d'aluminium.

Les exemples d'assemblages donnés sont uniquement des assemblages de métaux entre eux.

On a vu plus haut que, comme pour toutes les céramiques techniques, il est difficile de fabriquer des pièces de forme complexe en alumine, il est donc souvent nécessaire de fabriquer des structures à partir d'éléments en céramique de forme simple, puis de les assembler pour réaliser la structure finale.

Par ailleurs, la fabrication de pièces céramiques techniques avec des cotes précises demeure toujours très mal maîtrisée et l'usinage de telles pièces est inacceptable, en particulier pour des raisons de coût.

Il existe donc actuellement un besoin pour une composition de brasure et pour un procédé qui permette de réaliser, par brasage, entre deux céramiques de même nature, telle que l'alumine, ou entre l'alumine et un métal ou un alliage métallique, des liaisons fortes, mais aussi très réfractaires, c'est-à-dire pouvant notamment résister à des températures pouvant aller jusqu'à 1 500°C et même au-delà.

Aucun des procédés de brasage et des compositions de brasure décrits dans les documents de l'art antérieur ne répond à ce besoin.

En particulier, aucune des compositions de l'art antérieur ne remplit simultanément les critères suivants, mis en évidence par les inventeurs, et qui sont fondamentaux pour réaliser des composants de structure en céramique, telle que Al₂O₃, ou en céramique et en un métal ou un alliage métallique, impliquant des joints, en particulier des joints très réfractaires.
1 - La composition de brasure doit permettre de réaliser une liaison forte entre les deux pièces en céramique telle que l'alumine ou la pièce en céramique et la pièce en métal ou alliage métallique, ce qui implique soit une composition de brasure non réactive, c'est-à-dire chimiquement compatible avec l'alumine, soit une composition réactive mais dont la réactivité est alors parfaitement contrôlée et ne conduit pas à une détérioration des propriétés céramiques de l'alliage.
2 - La composition de brasure doit bien mouiller le carbure de silicium et bien adhérer à celui-ci.
3 - La composition de brasure doit avoir un coefficient de dilatation adapté à l'alumine, c'est-à-dire proche du coefficient de dilatation de celle-ci et/ou avoir un comportement fortement ductile, pour supprimer toute contrainte résiduelle qui pourrait apparaître au sein du joint lors du refroidissement et garantir qu'il n'y ait pas d'amorce de fissures, ce qui serait dommageable à la tenue mécanique de l'assemblage.
   Le coefficient de dilatation doit également être adapté au métal ou à l'alliage métallique que l'on souhaite assembler avec l'alumine.
4 - La brasure doit être ductile et facile à mettre en oeuvre.
5 - Enfin, le joint doit être très réfractaire, c'est-à-dire avec une température de brasage très élevée, par exemple, de 1 200 à 1 700°C lui permettant de résister à des températures d'usage de 1 500°C et plus.

En outre, il apparaît au regard de ce qui précède que la formulation d'une composition de brasure, pour le brasage de pièces à base d'alumine avec elles-mêmes ou avec des pièces en métal ou en alliage métallique est imprévisible et ne peut absolument pas se déduire des propriétés des brasures connues.

Le but de l'invention est donc de fournir une composition de brasure et un procédé d'assemblage par brasage de pièces ou composants en matériaux à base d'alumine entre elles ou avec des pièces en métal ou en alliage métallique qui répondent, entre autres, aux besoins cités plus haut, qui satisfont l'ensemble des exigences et critères mentionnés ci-dessus, qui éliminent les inconvénients, défauts, limitations rencontrés avec les compositions et procédés de l'art antérieur, et qui permettent de réaliser des joints très réfractaires.

Ce but et d'autres encore sont atteints, selon l'invention, dans une première variante par une composition de brasure réfractaire non réactive avec l'alumine, constituée de 2 à 10 at % d'aluminium, de 2 à 10 at % de titane, et de 80 à 96 at % d'une matrice constituée soit de palladium, soit de nickel, soit d'un alliage de nickel et de palladium en toutes proportions. Par toutes proportions, on entend, de préférence, de 0 à 100 % de Ni et de 0 à 100 % de palladium.

De préférence, ladite composition de brasure réfractaire non réactive avec l'alumine est constituée de 2 à 5 at % d'aluminium, de 2 à 5 at % de titane, et de 90 à 96 at % d'une matrice constituée, comme décrit ci-dessus.

Le même but est atteint, selon l'invention, dans une seconde variante, par une composition de brasure réfractaire réactive dont la réactivité avec l'alumine est contrôlée, constituée de 2 à 48 at % d'aluminium, de 10 à 96 at % de titane et de 2 à 80 at % d'une matrice constituée soit de palladium, soit de nickel, soit d'un alliage de palladium et de nickel en toutes proportions, avec la condition que le pourcentage atomique de titane, soit supérieur au pourcentage atomique d'aluminium.

De préférence, ladite composition de brasure réfractaire réactive, dont la réactivité avec l'alumine est contrôlée, est constituée de 15 à 30 at % d'aluminium, de 20 à 35 at % de titane, et de 45 à 60 at % de nickel, avec toujours la condition que le pourcentage atomique de titane soit supérieur au pourcentage atomique d'aluminium, c'est-à-dire que le rapport Ti/Al du pourcentage atomique de titane sur le pourcentage atomique d'aluminium soit supérieur à 1.

Une autre composition préférée de brasure réfractaire réactive, dont la réactivité avec l'alumine est contrôlée, est constituée de 2 à 10 at % d'aluminium, de 35 à 50 at % de titane et de 45 à 55 at % de nickel, la condition mentionnée ci-dessus étant bien sûr toujours valable.

Par brasage réactif, respectivement brasure réactive, on entend qu'il y a réaction entre la brasure et l'alumine conduisant à un produit de réaction interfacial, par brasage non réactif, on entend qu'il n'y a aucun produit de réaction intermédiaire, mais qu'il existe cependant une forte adhérence entre la brasure et l'alumine.

Aussi bien les compositions de brasure réactives que les compositions non réactives, selon l'invention, sont toutes deux constituées d'une matrice de Ni et/ou de Pd additionnée à la fois d'aluminium et de titane.

Les compositions de brasure selon l'invention, réactives ou non réactives, répondent aux besoins, satisfont à l'ensemble des exigences et critères mentionnés ci-dessus, et ne présentent pas les inconvénients des compositions de brasure de l'art antérieur.

Les compositions de brasure selon l'invention, qu'elles soient réactives ou non réactive, permettent d'obtenir, de manière surprenante une amélioration significative du mouillage de la composition de brasure sur l'alumine, ainsi qu'une forte adhérence de la composition de brasure sur le substrat, et elles sont très réfractaires avec une température de solidus généralement de 950 à 1 650°C, ce qui correspond à une température de fonctionnement de l'assemblage généralement de 900 à 1 500°C. Plus précisément, la température de solidus est généralement de 1 300 à 1 500°C pour les compositions non réactives et généralement de 950 à 1 650°C pour les compositions de brasure réactive, ce qui correspond respectivement à des températures de fonctionnement des assemblages généralement de 1 200 à 1 450°C, et de 900 à 1 600°C.

Les compositions réactives ont une large plage de solidus qui les rend adaptées à un grand nombre d'applications nécessitant une « réfractarité » variable.

Les inventeurs ont mis en évidence de manière surprenante que pour que les critères mentionnés ci-dessus soient remplis et que pour, en particulier, l'amélioration au mouillage et la forte adhérence soient réalisées tout en conservant une composition de brasure très réfractaire, il fallait se placer dans les domaines spécifiques de pourcentages atomiques mentionnés ci-dessus, c'est-à-dire des domaines dans lesquels on est en présence soit d'une composition de brasure non réactive, soit d'une composition de brasure réactive, mais à réactivité contrôlée.

Les domaines de composition des alliages ternaires ou quaternaires Al, Ti, Pd et/ou Ni dans lesquels ces alliages sont non réactifs ou présentent une réactivité contrôlée qui toutes deux conduisent aux propriétés voulues, ne sont absolument pas prévisibles, comme cela a été indiqué dans l'étude de l'art antérieur, cité plus haut.

Les domaines spécifiques de composition de brasure, selon l'invention, permettent de réaliser des joints très réfractaires et très résistants entre deux pièces à base d'alumine et entre des pièces à base d'alumine et des pièces en métal ou en alliage métallique, qui ne sont ni décrits, ni suggérés dans l'art antérieur.

Plus précisément, dans le cas des compositions de brasure non réactives, on sait, comme on l'a indiqué plus haut que le nickel et le palladium adhèrent faiblement à l'alumine sans la mouiller.

Les inventeurs ont observé, de manière surprenante, que l'ajout de faibles quantités d'aluminium et de titane - typiquement inférieure ou égale à 10 at % - à ces métaux permettrait d'obtenir une amélioration significative du mouillage, tout en obtenant une bonne adhérence de l'alliage sur le substrat.

Une observation microscopique de l'interface met en évidence l'absence de produit de réaction interfacial. Autrement dit, on obtient une très bonne compatibilité chimique, puisqu'il ne se produit pas de réaction, et une très bonne compatibilité mécanique, puisque l'adhérence est bonne.

L'absence de réactivité protège le joint de toutes les risques de fissuration qui pourraient être induites par un produit de réaction épais et fragilisant.

Au-delà des compositions de brasure non réactive définies par les pourcentages spécifiques, selon l'invention, et en l'absence de réaction, on observe une amélioration du mouillage, mais une détérioration de l'adhérence mécanique.

Plus précisément, dans le cas des compositions de brasure réactives, mais à réactivité contrôlée avec l'alumine de l'invention, les inventeurs ont observé que l'ajout aux compositions de brasure non réactives, selon l'invention, de quantités plus importantes de titane, conduisait à la formation d'un produit de réaction interfacial comprenant du titane et de l'oxygène et à la formation d'une interface forte entre la brasure et l'alumine. Si cette réaction n'est pas contrôlée, elle conduit à une détérioration des propriétés mécaniques de l'alliage.

De façon surprenante, il a été constaté par les inventeurs que l'ajout supplémentaire d'aluminium dans la brasure, de façon à se placer dans les plages spécifiques selon l'invention, permettait de contrôler parfaitement la réaction avec l'alumine, c'est-à-dire d'obtenir un produit de réaction ayant une épaisseur fine et une composition contrôlées assurant une forte adhérence entre l'alumine et la brasure.

De plus, on obtient avec ces alliages une forte amélioration de mouillage et l'angle de contact de la brasure sur l'alumine devient inférieur ou égal à 60°.

Ce dernier point est extrêmement important, puisqu'il autorise un brasage capillaire, à savoir une infiltration de la brasure dans le joint de brasage sans disposer directement la brasure entre les pièces à assembler, ce qui facilite grandement la conception des assemblages. La réactivité contrôlée comme l'absence de réactivité protège le joint de toutes les amorces de fissurations qui pourraient être induites par une zone de réaction épaisse et fragilisante.

Parmi les avantages communs aux compositions de brasure selon l'invention, qu'elles soient non réactives ou réactives, on peut citer, entre autres :
- les coefficients de dilatation adaptés à L'alumine ;
- une mise en oeuvre simple et à faible coût car la composition de brasure ne contient que des éléments d'un prix peu élevé.

Les compositions, selon l'invention, répondent, entre autres, au double critère de coefficient de dilatation et de viscosité pour réaliser facilement des joints, en particulier des joints épais - à savoir, des joints d'une épaisseur généralement de 0,1 à 0,5 mm.

Les compositions de brasure, selon l'invention, offrent la possibilité de braser l'alumine non seulement avec elle-même, mais aussi avec des métaux ou alliages métalliques.

Les compositions de brasure, selon l'invention, présentent une forte résistance à l'oxydation, par exemple dans des atmosphères fortement oxydantes du fait de la présence de titane et d'aluminium qui conduisent tous deux à la formation d'une couche passivante superficielle.

La brasure, selon l'invention, a également aussi l'avantage d'être peu sensible à la corrosion, par exemple par l'oléum, et l'acide nitrique.

En outre, du fait que les compositions de brasure, selon l'invention, sont peu sensibles à l'oxygène, aussi bien pour ce qui concerne les brasures non réactives que - plus surprenant - pour ce qui concerne les brasures réactives à réactivité contrôlée, la qualité de l'atmosphère du four de brasage est moins critique, et le mouillage est immédiat, ceci même avec des atmosphères ayant une pression partielle d'oxygène non négligeable, comme par exemple avec de l'argon de qualité commerciale, et le brasage peut être réalisé sous vide ou sous simple atmosphère (protection) de gaz neutre ou réducteur. Un tel gaz est choisi, par exemple, parmi l'hydrogène, l'argon, l'azote, et leurs mélanges, tels que les mélanges argon/hydrogène.

Parmi les avantages spécifiques aux compositions de brasure non réactives, selon l'invention, on peut notamment mentionner le fait que ces brasures sont ductiles et peuvent donc être facilement mis en oeuvre sous forme de feuillard, clinquant, ou autres, par exemple par laminage, ainsi que le fait que ces alliages conservent leur ductilité après le brasage et peuvent ainsi absorber des sollicitations cycliques.

Dans une large mesure, les compositions de brasure réactives à réactivité contrôlée, selon l'invention, sont également ductiles. Dans tous les cas, ces compositions peuvent être mises en oeuvre aisément sous forme de poudres ou de feuillard.

L'invention a également trait à un procédé d'assemblage d'une pièce en matériau à base d'alumine avec au moins une autre pièce en matériau à base d'alumine et/ou au moins une pièce en métal ou en alliage métallique, par brasage réfractaire non réactif dans lequel, selon une première variante, on met en contact lesdites pièces avec une composition de brasure non réactive avec l'alumine telle qu'elle a été décrite plus haut et on chauffe l'ensemble formé par les pièces et la composition de brasure à une température de brasage suffisante pour faire fondre la composition de brasure afin de former un joint réfractaire.

L'invention concerne, en outre, un procédé d'assemblage d'une pièce en matériau à base d'alumine avec au moins une autre pièce en matériau à base d'alumine et/ou au moins une pièce en métal ou en alliage métallique par brasage réfractaire réactif dans lequel, selon une seconde variante, on met en contact lesdites pièces avec une composition de brasure dont la réactivité avec l'alumine est contrôlée, telle qu'elle a été décrite plus haut, et on chauffe l'ensemble formé par les pièces et la composition de brasure à une température de brasage suffisante pour faire fondre la composition de brasure afin de former un joint réfractaire.

Aussi bien dans le cas du brasage non réactif que du brasage réactif à réactivité contrôlée, la température de brasage est généralement supérieure de 25°C et de préférence de 50°C à la température du liquidus de la composition de brasure.

Pour le brasage non réactif, la température de brasage est généralement de 1 400° à 1 600°C et pour le brasage réactif, la température de brasage est généralement de 1 000° à 1 750°C, de préférence de 1 050 à 1 700°C, de préférence encore, de 1 100 à 1 700°C.

Dans les deux cas, la température de brasage doit être inférieure à la température de fusion du métal ou de l'alliage métallique si l'on doit réaliser un assemblage alumine/métal.

La plupart des avantages du procédé, selon l'invention, sont les avantages inhérents à la brasure mise en oeuvre et ont déjà été décrits ci-dessus.

Comme autres avantages du procédé de l'invention, aussi bien selon sa première que selon sa seconde variantes (non réactive ou à réactivité contrôlée), on peut également citer :
- des durées de brasage courtes, par exemple de 5 à 10 minutes seulement, évitant dans le cas d'un assemblage alumine-métal ou alliage métallique le grossissement de grains de métaux ou d'alliages métalliques réfractaires. De plus, le paramètre de la durée de brasage n'est plus critique, et si nécessaire, par exemple, dans le cas du brasage de pièces de grandes dimensions, et/ou d'une inertie thermique du four, le temps de brasage pourra être facilement allongé ou adapté ;
- une grande simplicité induisant de faibles coûts globaux du procédé, en particulier le procédé selon l'invention permet d'assembler l'alumine avec elle-même ou avec des métaux en alliages métalliques en une seule opération.

Le procédé selon l'invention est généralement réalisé en formant une poudre de la composition de brasure, en mettant en suspension cette poudre dans un liant organique et en enduisant les surfaces des parties des pièces à assembler avec la suspension obtenue. Cette composition de brasure peut être appliquée sur les surfaces des parties des pièces à assembler (« entre les pièces ») et/ou à proximité de ces surfaces à assembler jointes.

On peut également mettre la composition de brasure sous la forme d'un feuillard ou clinquant, par exemple par laminage et placer ce feuillard ou clinquant entre les surfaces des pièces à assembler et/ou à proximité de ces surfaces.

De préférence, le feuillard est intercalé entre les pièces à assembler.

On a vu, en effet, ci-dessus que c'était là un des avantages des compositions de brasure, selon l'invention, et notamment des compositions de brasure non réactives que d'être ductiles et donc de pouvoir être facilement mises en oeuvre sous forme de feuillard par laminage.

Grâce aux compositions de brasure, selon l'invention, on a vu qu'il est possible de réaliser un brasage capillaire, à savoir une infiltration de la brasure dans le joint de brasage sans disposer directement la brasure entre les pièces à assembler.

L'invention concerne également l'assemblage réfractaire obtenu par le procédé décrit ci-dessus, selon l'une ou l'autre variante réactive ou non réactive.

Un tel assemblage présente essentiellement tous les avantages inhérents à la composition de brasure mise en oeuvre et au procédé décrits plus haut.

Par exemple, les assemblages, selon l'invention, sont très réfractaires et peuvent résister à de hautes températures pouvant aller jusqu'à 1 600°C et au-delà.

Tous les joints obtenus par le procédé de l'invention ont une très bonne résistance mécanique définie, par exemple, par une σᵣ très élevée, et, lors d'un test mécanique, la rupture a toujours lieu dans un des substrats d'alumine ou de métal, mais jamais dans le joint lui-même.

Etant donné le caractère non réactif de la composition de brasure non réactive, selon la première variante, de l'invention, il est possible de dissoudre la brasure si nécessaire et de procéder de nouveau à un brasage. Puisqu'il n'y a pas de réaction de la brasure sur l'alumine, un rebrasage tel qu'une réparation est possible.

D'autres caractéristiques et avantages de l'invention ressortiront mieux à la lecture de la description détaillée qui va suivre, donnée à titre illustratif et non limitatif.

Le procédé de l'invention consiste, tout d'abord, à préparer une composition de brasure contenant de l'aluminium, du titane, du palladium et/ou du nickel dans les proportions voulues indiquées ci-dessus.

La composition de brasure se présente, généralement, sous la forme d'un feuillard ou clinquant ou bien sous la forme d'une composition pulvérulente. La composition de brasure peut être préparée, par exemple, en synthétisant, tout d'abord, à partir des éléments purs un composé intermétallique contenant de l'aluminium, du titane, du palladium et/ou du nickel.

La synthèse d'une telle composition intermétallique se fait, par exemple, en introduisant les différents métaux, par exemple, sous la forme de fils, de morceaux, de barreaux, ou autres, de préférence de barreaux dans un creuset, de préférence en nitrure de bore, en chauffant, généralement à une température de 50°C supérieure à celle du liquidus, c'est-à-dire par exemple, à une température de 1 250 à 1 700°C, de préférence, sous vide, c'est-à-dire à une pression de 10⁻³ à 10⁻⁴ Pa, ou sous une atmosphère de gaz inerte, de préférence d'argon, pendant une durée de 5 à 10 minutes pour faire fondre les différents constituants de ladite composition et obtenir le composé intermétallique final désiré, homogène.

Le composé intermétallique obtenu qui constitue la brasure est ensuite mis en forme, par exemple par laminage, pour obtenir un clinquant ou feuillard d'une épaisseur généralement de 50 à 500 µm, de préférence 100 à 200 µm.

La première plage correspond plutôt aux compositions dites non réactives.

Le composé intermétallique obtenu, constituant la brasure, peut également être broyé, en particulier lorsque sa ductilité n'est pas suffisante pour qu'il soit laminé, ce qui est souvent le cas des compositions de brasure dites « réactives ».

Le broyage peut être réalisé dans tout appareil adéquat, par exemple dans un mortier, pour obtenir une poudre de granulométrie adéquate, c'est-à-dire dont les grains ont, par exemple, un diamètre de 1 à 250 µm.

La poudre de composition de brasure est mise en suspension de manière classique dans un liant organique liquide, de préférence relativement visqueux, qui se décompose, par exemple, entre 100 et 300°C sans laisser de traces. Il peut s'agir, par exemple, d'un cément de type NICROBRAZ®.

Au lieu d'être synthétisé, comme décrit plus haut, ledit composé intermétallique peut également être un composé du commerce, déjà sous la formule, voulu ou transformé pour les besoins du procédé.

Les surfaces des pièces, par exemple au nombre de deux, à assembler sont dégraissées dans un solvant organique par exemple du type cétone, ester, éther, alcool, ou un mélange de ceux-ci, etc. un solvant préféré étant l'éthanol ; puis séchées.

Les pièces à assembler sont en général au nombre de deux, mais on peut aussi assembler simultanément un plus grand nombre de pièces pouvant aller jusqu'à 100.

La composition de brasure et le procédé selon l'invention permettent d'assembler des pièces en matériau à base de Al₂O₃ entre elles ou avec des pièces en métal ou en alliage métallique.

Par pièce en matériaux à base d'alumine et pièce en métal ou en alliage métallique, on entend généralement tout élément, ou entité de forme quelconque entrant par exemple, après assemblage avec une ou plusieurs autres pièces, dans des structures de plus grande dimension.

Par matériau à base d'alumine, on entend généralement ici tous les matériaux dont la teneur en alumine est supérieure ou égale à 90 % en poids.

Cela comprend, par exemple, le saphir (Al₂O₃ monocristallin), ou l'alumine frittée, ainsi que les composites à base d'alumine, tels que les composites Al₂O₃/ZrO₂ (matrice Al₂O₃), les composites Al₂O₃/mullite (matrice Al₂O₃), les composites Al₂O₃/SiC (matrice Al₂O₃), et les composites Al₂O₃/Si₃N₄ (matrice Al₂O₃).

Par pièce en métal ou en alliage métallique, on entend généralement une pièce en un métal choisi parmi Ti, Al, Ni, Pt, Mo, Zr ou en un de leurs alliages.

De préférence, le métal ou l'alliage métallique est choisi parmi les composés intermétalliques réfractaires à base principalement de titane et d'aluminium ; de nickel et d'aluminium ; les alliages à base de titane ; le platine et le molybdène.

De préférence, les métaux ou alliages métalliques doivent avoir une réactivité limitée avec la brasure et un coefficient de dilatation adapté à celui de l'alumine. Il est à noter que grâce à la composition de brasure et au procédé de brasage selon l'invention, il est possible de mettre en oeuvre des alliages métalliques ayant un solidus supérieur à 1 300°C - ce qui est le cas des alliages cités ci-dessus - et de pouvoir faire fonctionner les assemblages alumine-métal/alliage jusqu'à des températures aussi élevées que 1 200°C et plus.

Dans le cas où l'on assemble entre elles des pièces à base d'alumine, les deux pièces ou plus à assembler peuvent être en un même matériau, à base d'alumine, par exemple en composite ou chacune des pièces peut être en un matériau à base d'alumine différent ; il en est de même si l'on assemble plusieurs pièces à base d'alumine avec une ou plusieurs pièces en métal ou en alliage métallique.

De la même manière, si les pièces à assembler comprennent deux ou plusieurs pièces en métal ou alliage métallique, les deux pièces ou plus en métal ou alliage métallique peuvent être en un même métal ou alliage où chacune des pièces peut être en un métal ou alliage différent.

La brasure sous forme de feuillard ou clinquant, décrite plus haut, est nettoyée, dégraissée à l'aide d'un solvant organique, analogue à celui mentionné ci-dessus, de préférence de l'éthanol, puis séchée.

Le feuillard ou clinquant est ensuite placé, de préférence, entre les surfaces des parties des pièces à assembler. Un poids est ensuite disposé sur l'ensemble ainsi obtenu pour le maintenir en place. Ce poids est généralement faible (de l'ordre de 20 à 200 g) et est typique d'un assemblage brasé.

Si la composition de brasure est une composition pulvérulente, les surfaces des parties des pièces à assembler sont enduites de la suspension de la composition de brasure, puis les surfaces mises en contact. Ou bien, on peut mettre en contact les surfaces des parties des pièces à assembler, et appliquer ensuite la suspension de la composition de brasure à proximité du joint formé par les deux surfaces mise en contact.

Les pièces alors prêtes à être brasées sont alors disposées dans un four, sous vide ou sous atmosphère de gaz neutre.

On procédera, de préférence, sous vide dans le cas d'un brasage non réactif et sous atmosphère de gaz neutre dans le cas d'un brasage réactif.

Généralement, le vide est un vide secondaire, c'est-à-dire que la pression est de 10⁻³ à 10⁻⁵ Pa, par exemple, de 10⁻⁴ Pa.

De préférence, le gaz neutre est de l'argon ou de l'azote ou de l'hydrogène ou de l'argon hydrogéné à 5 %.

L'invention permet même d'utiliser de l'argon de qualité commerciale ayant une pression partielle d'oxygène non négligeable.

On effectue tout d'abord un premier palier de température qui permet un dégazage de l'ensemble et éventuellement une évaporation du liant (déliantage), tandis qu'un second palier de température permet le brasage, proprement dit.

Le premier palier est effectué par exemple à une température de 100 à 300°C, de préférence de 200 à 300°C pendant une durée par exemple de 0,5 à 1 heure, de préférence 1 heure.

Le second palier est effectué à une température correspondant à la température de fusion de la composition de brasure choisie, mais cette température, est, de préférence, une température au moins supérieure de 25°C, de préférence de 50°C, à la température du liquidus de la composition.

Selon les compositions, cette température du liquidus varie, par exemple, de 1 000 à 1 650°C. La température de brasage variera donc, par exemple, de 1 050°C à 1 700°C.

Plus précisément, par exemple, de 1 400 à 1 600°C pour le brasage non réactif et, par exemple, de 1 050 à 1 700°C pour le brasage réactif.

Une telle température de fusion des compositions permet, selon un autre avantage du procédé de l'invention, une utilisation de l'assemblage, notamment et même jusqu'à 1 600°C selon la composition de brasage.

La durée du brasage, c'est-à-dire le cycle thermique de réalisation de l'assemblage est, selon l'invention, généralement de courte durée : le temps de palier nécessaire est par exemple inférieur à 30 minutes. et de préférence de 5 à 10 minutes, de préférence encore de 10 minutes.

La pression du four est généralement une pression de vide secondaire de 10⁻³ à 10⁻⁵ Pa, par exemple, 10⁻⁴ Pa.

Lorsqu'on opère en atmosphère de gaz neutre, de préférence de l'argon, la pression est de 10⁻³ à 1 atmosphère.

On refroidit ensuite l'assemblage jusqu'à la température ambiante à raison par exemple de 5°C par minute.

Les assemblages de pièces en alumine et éventuellement de pièces en métal ou en alliage métallique comportant des joints préparés par le procédé selon l'invention permettent de réaliser des structures, appareils, composants de formes complexes ayant des températures d'utilisation élevées pouvant aller jusqu'à 1 600°C avec une grande précision.

Les propriétés intéressantes de l'alumine, sont, entre autres :
- une grande dureté ;
- une faible densité ;
- une bonne résistance à l'abrasion ;
- ainsi que d'intéressantes propriétés diélectriques.

De plus, l'alumine présente une très bonne résistance chimique à la corrosion, par exemple, une très bonne résistance à l'oxydation, par exemple, sous air à haute température, par exemple, jusqu'à 1 300°C. Enfin, l'alumine est la céramique technique présentant le rapport coût de fabrication/qualité, le plus intéressant parmi les céramiques techniques.

Toutes ces propriétés font donc de l'alumine, un matériau de choix pour de nombreuses applications à haute température présentes et futures.

Ainsi, parmi les applications des assemblages obtenus par le procédé de l'invention, on peut citer entre autres :

Les échangeurs thermiques, les brûleurs, les réacteurs, les garnitures de pompe, les résistances de four, mais également les chambres de combustion pour l'automobile, les composites pour l'industrie aéronautique, les capteurs de position permettant de mesurer l'espacement entre les parties fixes et mobiles d'un moteur d'avion, les allumeurs de chambre de combustion pour moteur d'avion, ainsi de manière générale que toutes les structures destinées à des environnements corrosifs à des températures supérieures à 1 600°C.

Toutes ces applications nécessitent l'assemblage de pièces en matériau à base d'alumine avec elles-mêmes ou avec des métaux ou alliages métalliques.

### Exemple 1

Dans cet exemple, on a déterminé les caractéristiques de mouillage et d'adhérence de diverses compositions de brasure dites « non réactives » conformes ou non à l'invention.

On prépare des compositions de brasure en faisant fondre des métaux purs sous forme de barreaux, à une température supérieure de 50°C à celle du liquidus, sous une atmosphère d'argon.

On prélève une petite quantité de la composition de brasure ainsi obtenue et on en détermine les caractéristiques de mouillage.

La mouillabilité est déterminée par la méthode dite de la « goutte posée » qui consiste à faire fondre la composition de brasure étudiée et à en déposer une goutte sur un substrat.

La mouillabilité de l'alliage étudié est définie, de manière classique, par l'angle de contact, c'est-à-dire l'angle compris entre la surface du substrat et la tangente à la surface de la goutte à son point de contact avec la surface du substrat. On considère qu'il y a mouillage si l'angle de contact est inférieur à 90°, et qu'il n'y a pas mouillage si l'angle de contact est supérieur à 90°.

En effet, en fonction des interactions entre la composition de brasure et le substrat, la goutte liquide forme une bille (non mouillage) ou s'étale (mouillage).

On a également déterminé les caractéristiques d'adhérence de chaque composition de brasure.

Les résultats des mesures de mouillabilité et d'adhérence des différentes compositions de brasure sont regroupés dans le tableau I suivant, où on a indiqué la nature du substrat, la composition de la brasure, la température à laquelle on a fait fondre les compositions de brasure, l'atmosphère dans laquelle la fusion s'est déroulée, l'angle de contact de la composition de brasure sur le substrat et la nature de l'adhérence obtenue.

**Tableau I**

| Résultats de mouillage et d'adhérence de compositions de brasure non réactives (Ni, Pd) - Al - Ti sur l'alumine | | | | |
|---|---|---|---|---|
| **SUBSTRAT** | **COMPOSITION DE BRASURE (at %)** | **TEMPERATURE ET ATMOSPHERE** | **ANGLE DE CONTACT (°)** | **ADHERENCE** |
| Al₂O₃ monocristallin | Pd | 1 550°C - Argon* | 121 | interface forte |
| Al₂O₃ monocristallin | Pd - 5 Al - 5 Ti | 1 600°C - Argon* | 85 | interface forte |
| Al₂O₃ monocristallin | Pd - 10 Al - 5 Ti | 1 600°C - Argon* | 80 | interface faible |
| Al₂O₃ monocristallin | Pd - 15 Al - 10 Ti | 1 600°C - Argon* | 75 | interface faible |
| Al₂O₃ monocristallin | Ni | 1 500°C - Argon* | 112 | interface forte |
| Al₂O₃ monocristallin | Ni - 3 Al - 3 Ti | 1 500°C - Argon* | 92 | interface forte |
| Al₂O₃ monocristallin | Ni - 10 Al - 10 Ti | 1 500°C - Argon* | 93 | interface faible |
| Al₂O₃ monocristallin | Ni - 15 Al - 10 Ti | 1 500°C - Argon* | 85 | interface faible |

| | | | | |
|---|---|---|---|---|
| (* Argon de pureté commerciale) | | | | |

L'ajout d'Al et de Ti en faibles teneurs (moins de 10 at %) permet d'améliorer le mouillage et d'obtenir des angles de contact proches de 90°, tout en conservant une forte adhérence entre l'alliage et l'alumine. De plus, l'examen de l'interface met en évidence l'absence d'un produit de réaction interfacial. Au-delà de ces compositions et en l'absence de réaction, on observe encore une amélioration du mouillage, mais avec une faible adhérence due vraisemblablement à la présence de bulles à l'interface.

### Exemple 2

Cet exemple concerne la tenue mécanique d'une liaison entre deux pièces en alumine frittée, obtenue en mettant en oeuvre le procédé selon l'invention, en utilisant une composition de brasure non réactive selon l'invention constituée en pourcentages atomiques de 94 % de Ni, 3 % d'aluminium et 3 % de titane.

### a) Préparation de la composition de brasure et des pièces à assembler

On synthétise une composition Ni - 3 at % Al - 3 at % Ti à partir des métaux purs Ni, Al et Ti sous forme de barreaux.

Les métaux purs sont introduits dans un creuset en nitrure de bore, puis chauffés sous argon à 1 500°C pendant 5 minutes pour obtenir la composition finale désirée et homogène.

La brasure obtenue est ductile et est laminée pour obtenir un feuillard de 100 à 200 µm d'épaisseur.

Le feuillard nettoyé à l'alcool est placé entre deux pièces en alumine, préalablement nettoyées également à l'alcool.

Un poids est disposé sur cet ensemble pour le maintenir ; ce poids est faible (20 g) et est typique d'un assemblage brasé.

### b) Brasage

L'ensemble décrit ci-dessus est disposé dans un four et le cycle de brasage est réalisé sous un vide secondaire.

Un premier palier à une température de 300°C est tout d'abord réalisé pendant 1 heure, puis le brasage, proprement dit, est effectué dans les conditions opératoires suivantes :
- température de brasage : 1 500°C ;
- durée du palier : 10 minutes ;
- atmosphère : vide secondaire (10⁻⁵ mbar).

L'assemblage obtenu est ensuite refroidi jusqu'à la température ambiante à raison de 5°C par minute.

### c) Test mécanique de la liaison

Un test mécanique en cisaillement a été réalisé sur cette liaison.

Il n'y a pas eu de rupture de la jonction avec une sollicitation en cisaillement de 272 MPa.

### Exemple 3

Cet exemple concerne la tenue mécanique d'une liaison entre deux pièces en alumine frittée, obtenue en mettant en oeuvre le procédé selon l'invention, en utilisant une composition de brasure non réactive, selon l'invention, constituée en pourcentages atomiques de 94 % de palladium, 3 % d'aluminium et 3% de titane.

### a) Préparation de la composition de brasure et des pièces à assembler

On synthétise une composition Ni - 3 at % Al - 3 at % Ti à partir des métaux purs Pd, Al et Ti sous forme de barreaux.

Les métaux purs sont introduits dans un creuset en nitrure de bore, puis chauffés sous argon à 1 600°C pendant 5 minutes pour obtenir la composition finale désirée et homogène.

La brasure obtenue est ductile et est laminée pour obtenir un feuillard de 100 à 200 µm d'épaisseur.

Le feuillard nettoyé à l'alcool est placé entre deux pièces en alumine, préalablement nettoyées également à l'alcool.

Un poids est disposé sur cet ensemble pour le maintenir, ce poids est faible (20 g) et est typique d'un assemblage brasé.

### b) Brasage

L'ensemble décrit ci-dessus est disposé dans un four et le cycle de brasage est réalisé sous vide secondaire. Un premier palier à une température de 300°C est, tout d'abord, réalisé pendant 1 heure.

Puis, le brasage, proprement dit, est effectué dans les conditions opératoires suivantes :
- température de brasage : 1 600°C ;
- durée du palier ; 10 minutes ;
- atmosphère : vide secondaire.

L'assemblage obtenu est ensuite refroidi jusqu'à la température ambiante, à raison de 5°C par minute.

### c) Test mécanique de la liaison

Un test mécanique en cisaillement a été réalisé sur cette liaison. La rupture a été obtenue pour 65 MPa.

### Exemple 4

Dans cet exemple, on a déterminé les caractéristiques de mouillage et d'adhérence de diverses compositions de brasure réactives, conformes ou non à l'invention. La préparation des compositions de brasure, ainsi que les mesures de mouillabilité et d'adhérence sont effectuées de la même manière que dans l'exemple 1 ci-dessus.

Les résultats de mesures de mouillabilité et d'adhérence des différentes compositions de brasure sont regroupées dans le tableau II suivant.

**Tableau II**

| Résultats de mouillage et d'adhérence de compositions de brasure réactives (Ni, Pd) - Al - Ti sur l'alumine | | | | |
|---|---|---|---|---|
| **SUBSTRAT** | **COMPOSITION DE BRASURE (at %)** | **TEMPERATURE ET ATMOSPHERE** | **ANGLE DE CONTACT (°)** | **ADHERENCE** |
| Al₂O₃ monocristallin | Ni - 20 Al - 20 Ti | 1 550°C - Argon* | 62 | interface faible |
| Al₂O₃ monocristallin | Ni - 19 Al - 25 Ti | 1 550°C - Argon* | 59 | interface forte |
| Al₂O₃ monocristallin | Ni - 12 Al - 23 Ti | 1 600°C - Argon* | 50 | interface forte |

| | | | | |
|---|---|---|---|---|
| (* Argon de pureté commerciale) | | | | |

L'ajout de quantités importantes d'Al et de Ti permet d'obtenir un bon mouillage avec une forte adhérence entre l'alliage et l'alumine. De plus, l'examen de l'interface met en évidence un produit de réaction interfacial très fin de l'ordre de quelques µm d'épaisseur. Ces compositions permettent d'obtenir une réaction contrôlée de la brasure en épaisseur et composition.

### Exemple 5

Cet exemple concerne la tenue mécanique d'une liaison entre deux pièces en alumine frittée, obtenue en mettant en oeuvre le procédé selon l'invention, en utilisant une composition de brasure réactive, selon l'invention, constituée en pourcentages atomiques de 25 % d'aluminium, 50 % de titane et 25 % de nickel.

### a) Préparation de la composition de brasure

On synthétise une composition Ni - 25 at % Al - 50 at % Ti à partir des métaux purs Ni, Al et Ti sous forme de barreaux.

Les métaux purs sont introduits dans un creuset en nitrure de bore, puis chauffés sous argon à 1 500°C pendant 5 minutes pour obtenir la composition finale désirée et homogène. La brasure obtenue est ductile et est laminée pour obtenir un feuillard de 100 à 200 µm d'épaisseur.

Le feuillard nettoyé à l'alcool est placé entre deux pièces en alumine, préalablement nettoyées également à l'alcool.

Un poids est disposé sur cet ensemble pour le maintenir ; ce poids est faible (20 g) et est typique d'un assemblage brasé.

### b) Brasage

L'ensemble décrit ci-dessus est disposé dans un four et le cycle de brasage est réalisé sous une atmosphère d'argon. Un premier palier à une température de 300°C est réalisé pendant 1 heure, puis le brasage, proprement dit, est effectué dans les conditions opératoires suivantes :
- température de brasage : 1 500°C ;
- durée du palier : 5 minutes ;
- pression d'argon : 1 bar.

L'assemblage obtenu est ensuite refroidi jusqu'à la température ambiante, à raison de 5°C par minute.

### c) Test mécanique de la liaison

Un test mécanique en cisaillement a été réalisé sur cette liaison. La rupture a été obtenue pour 127 MPa.

### Exemple 6

Cet exemple concerne la tenue mécanique d'une liaison entre deux pièces en alumine frittée, obtenue en mettant en oeuvre le procédé, selon l'invention, en utilisant une composition de brasure. réactive, selon l'invention, constituée en pourcentages atomiques de 20 % d'aluminium, 25 % de titane et le reste de nickel.

### a) Préparation de la composition de brasure

On a synthétisé une composition Ni - 20 at % Al - 25 at % Ti à partir des métaux purs Ni, Al et Ti sous forme de barreaux;

les métaux purs sont introduits dans un creuset en nitrure de bore, puis chauffés sous argon à 1 500°C pendant 5 minutes pour obtenir la composition finale désirée et homogène. La brasure obtenue est ductile et est laminée pour obtenir un feuillard de 100 à 200 µm d'épaisseur.

Le feuillard nettoyé à l'alcool est placé entre deux pièces en alumine, préalablement nettoyées également à l'alcool.

Un poids est disposé sur cet ensemble pour le maintenir ; ce poids est faible (20 g) et est typique d'un assemblage brasé.

### b) Brasage

L'ensemble décrit ci-dessus, est disposé dans un four et le cycle de brasage, est réalisé sous une atmosphère d'argon. Un premier palier à une température de 300°C est réalisé pendant 1 heure, puis le brasage, proprement dit, est effectué dans les conditions opératoires suivantes :
- température de brasage : 1 500°C ;
- durée du palier : 5 minutes ;
- pression d'argon : 1 bar.

L'assemblage obtenu est ensuite refroidi jusqu'à la température ambiante, à raison de 5°C par minute.

### c) Test mécanique

Lors du brasage, la brasure a complètement infiltré le joint par capillarité assurant une très bonne tenue mécanique des pièces.

Un test mécanique en cisaillement a été réalisé sur cette liaison. La rupture a été obtenue pour 177 Mpa.

## Revendications

1. Composition de brasure réfractaire, non réactive avec l'alumine, constituée en pourcentages atomiques, de 2 à 10 % d'aluminium, de 2 à 10 % de titane, et de 80 à 96 % d'une matrice constituée soit de palladium, soit de nickel, soit d'un alliage de nickel et de palladium en toutes proportions.

2. Composition de brasure réfractaire, non réactive avec l'alumine, selon la revendication 1, constituée en pourcentages atomiques, de 2 à 5 % d'aluminium, de 2 à 5 % de titane, et de 90 à 96 % d'une matrice constituée soit de palladium, soit de nickel, soit d'un alliage de nickel et de palladium en toutes proportions.

3. Composition de brasure réfractaire réactive, dont la réactivité avec l'alumine est contrôlée, constituée en pourcentages atomiques, de 2 à 48 % d'aluminium, de 10 à 96 % de titane, et de 2 à 80 % d'une matrice constituée soit de palladium, soit de nickel, soit d'un alliage de nickel et de palladium en toutes proportions, avec la condition que le pourcentage atomique de titane soit supérieur au pourcentage atomique d'aluminium.

4. Composition de brasure réfractaire réactive, selon la revendication 3, dont la réactivité avec l'alumine est contrôlée, constituée en pourcentages atomiques, de 15 à 30 % d'aluminium, de 20 à 35 % de titane et de 45 à 60 % de nickel.

5. Composition de brasure réfractaire réactive, selon la revendication 3, dont la réactivité avec l'alumine est contrôlée, constituée en pourcentages atomiques, de 2 à 10 % d'aluminium, de 35 à 50 % de titane, et de 45 à 55 % de nickel.

6. Procédé d'assemblage d'une pièce en matériau à base d'alumine avec au moins une autre pièce en matériau à base d'alumine et/ou au moins une pièce en métal ou en alliage métallique, par brasage réfractaire non réactif dans lequel on met en contact lesdites pièces avec une composition de brasure réfractaire non réactive selon l'une quelconque des revendications 1 et 2, et on chauffe l'ensemble formé par les pièces et la composition de brasure à une température de brasage suffisante pour faire fondre la composition de brasure afin de former un joint réfractaire.

7. Procédé d'assemblage d'une pièce en matériau d'alumine avec au moins une autre pièce en matériau à base d'alumine et/ou au moins une pièce en métal ou en alliage métallique, par brasage réfractaire réactif, dans lequel on met en contact lesdites pièces avec une composition de brasure réfractaire, dont la réactivité avec l'alumine est contrôlée, selon l'une quelconque des revendications 3 à 5, et on chauffe l'ensemble formé par les pièces et la composition de brasure à une température de brasage suffisante pour faire fondre la composition de brasure afin de former un joint réfractaire.

8. Procédé selon la revendication 6, dans lequel la température de brasage est de 1 400 à 1 600°C.

9. Procédé selon la revendication 7, dans lequel la température de brasage est de 1 000 à 1 750°C.

10. Procédé selon la revendication 6 ou la revendication 7, dans lequel la durée de brasage est de 5 à 10 minutes.

11. Procédé selon la revendication 6 ou la revendication 7, dans lequel on forme une poudre de composition de brasure, on met en suspension cette poudre dans un liant organique et en ce qu'on enduit les surfaces des parties des pièces à assembler avec la suspension obtenue.

12. Procédé selon la revendication 6 ou la revendication 7, dans lequel la composition de brasure est mise sous la forme d'un clinquant ou feuillard.

13. Procédé selon la revendication 11 ou la revendication 12, dans lequel ladite composition de brasure est placée entre les pièces à assembler et/ou à proximité.

14. Procédé selon la revendication 13, dans lequel on réalise un brasage capillaire.

15. Procédé selon l'une quelconque des revendications 6 à 14, dans lequel ledit matériau à base d'alumine a une teneur en alumine supérieure ou égale à 90 % en poids.

16. Procédé selon l'une quelconque des revendications 6 à 15, dans lequel ledit matériau à base d'alumine est choisi parmi le saphir, l'alumine frittée et les composites à base d'alumine.

17. Procédé selon la revendication 16, dans lequel lesdits composites à base d'alumine sont choisis parmi les composites Al₂O₃/ZrO₂, les composites Al₂O₃/mullite, les composites Al₂O₃/SiC, et les composites Al₂O₃/Si₃N₄, à matrices Al₂O₃.

18. Procédé selon l'une quelconque des revendications 6 à 17, dans lequel ledit métal ou alliage métallique est choisi parmi Ti, Al, Ni, Pt, Mo, Zr et leurs alliages.

19. Procédé selon la revendication 18, dans lequel ledit métal ou alliage métallique est choisi parmi les composés intermétalliques réfractaires à base de titane et d'aluminium ; de métal et d'aluminium ; les alliages à base de titane ; le platine et le molybdène.

20. Procédé selon l'une quelconque des revendications 6 à 19, dans lequel le brasage est réalisé sous vide ou sous atmosphère de gaz neutre ou réducteur.

21. Procédé selon la revendication 20, dans lequel ledit gaz est choisi parmi l'hydrogène, l'argon, l'azote et leurs mélanges tels que les mélanges argon/hydrogène.

22. Assemblage obtenu par par le procédé selon la revendication 6 ou la revendication 7.

## Claims

1. Refractory braze composition, non-reactive with alumina, whose atomic percentage composition is 2 to 10 % aluminium, 2 to 10 % titanium and 80 to 96 % of a matrix formed either of palladium, or of nickel, or of a nickel and palladium alloy in all proportions.

2. Refractory braze composition, non-reactive with alumina, according to claim 1, whose atomic percentage composition is 2 to 5 % aluminium, 2 to 5 % titanium, and 90 to 96 % of a matrix formed either of palladium, or of nickel, or of a nickel and palladium alloy in all proportions.

3. Reactive refractory braze composition, whose reactivity with alumina is controlled and whose atomic percentage composition is 2 to 48 % aluminium, 10 to 96 % titanium and 2 to 80 % of a matrix formed either of palladium, or of nickel or of a nickel and palladium alloy in all proportions, provided that the atomic percentage of titanium is greater than the atomic percentage of aluminium.

4. Reactive refractory braze composition, according to claim 3, whose reactivity with alumina is controlled and whose atomic percentage composition is 15 to 30 % aluminium, 20 to 35 % titanium and 45 to 60 % nickel.

5. Reactive refractory braze composition according to claim 3, whose reactivity with alumina is controlled and whose atomic percentage composition is 2 to 10 % aluminium, 35 to 50 % titanium, and 45 to 55 % nickel.

6. Assembly process for a part in an alumina-based material with at least one other part in an alumina-based material and/or at least one part in metal or a metal alloy, by non-reactive refractory brazing in which said parts are contacted with a non-reactive refractory braze composition according to either of claims 1 and 2, the assembly formed by the parts and the braze composition being heated to a sufficient brazing temperature to melt the braze composition in order to form a refractory joint.

7. Assembly process for a part in alumina material with at least one other part in an alumina-based material and/or at least one part in metal or a metal alloy, by reactive refractory brazing, in which said parts are contacted with a refractory braze composition whose reactivity with alumina is controlled, according to any of claims 3 to 5, and the assembly formed by the parts and the braze composition is heated to a sufficient brazing temperature to cause the braze composition to melt in order to form a refractory joint.

8. Process according to claim 6, in which the brazing temperature ranges from 1400 to 1600°C.

9. Process according to claim 7, in which the brazing temperature ranges from 1000 to 1750°C.

10. Process according to claim 6 or claim 7, in which the brazing time is 5 to 10 minutes.

11. Process according to claim 6 or claim 7, in which a powder of the braze composition is formed, this powder is placed in suspension with an organic binder and in that the assembly surfaces of the parts to be assembled are coated with the suspension obtained.

12. Process according to claim 6 or claim 7, in which the braze composition is made into foil or strip form.

13. Process according to claim 11 or claim 12, in which said braze composition is placed between the parts to be assembled and/or in their vicinity.

14. Process according to claim 13, in which capillary brazing is conducted.

15. Process according to any of claims 6 to 14, in which said alumina-based material has an alumina content of 90 % by weight or more.

16. Process according to any of claims 6 to 15, in which said alumina-based material is chosen from among sapphire, sintered alumina and alumina-based composites.

17. Process according to claim 16, in which said alumina-based composites are chosen from among Al₂O₃/ZrO₂ composites, Al₂O₃/mullite composites, Al₂O₃/SiC composites and Al₂O₃/Si₃N₄ composites, with Al₂O₃ matrices.

18. Process according to any of claims 6 to 17, in which said metal or metal alloy is chosen from among Ti, Al, Ni, Pt, Mo, Zr and their alloys.

19. Process according to claim 18, in which said metal or metal alloy is chosen from among the refractory intermetallic compounds containing titanium and aluminium; metal and aluminium; titanium-based alloys; platinum and molybdenum.

20. Process according to any of claims 6 to 19, in which brazing is conducted in a vacuum or in a neutral gas or reducing gas atmosphere.

21. Process according to claim 20, in which said gas is chosen from among hydrogen, argon, nitrogen and their mixtures such as argon/hydrogen mixtures.

22. Assembly obtained by the process according to claim 6 or claim 7.

## Patentansprüche

1. Hochschmelzende, gegenüber Aluminiumoxid nicht-reaktive Hartlötzusammensetzung, die - in Atomprozent - aus 2 bis 10 % Aluminium, 2 bis 10 % Titan und 80 bis 96 % einer Matrix, die aus Palladium, Nickel oder einer Legierung von Nickel und Palladium in allen Verhältnissen besteht, besteht.

2. Hochschmelzende, gegenüber Aluminiumoxid nicht-reaktive Hartlötzusammensetzung nach Anspruch 1, die - in Atomprozent - aus 2 bis 5 % Aluminium, 2 bis 5 % Titan und 90 bis 96 % einer Matrix, die aus Palladium, Nickel oder einer Legierung von Nickel und Palladium in allen Verhältnissen besteht, besteht.

3. Hochschmelzende reaktive Hartlötzusammensetzung, deren Reaktivität gegenüber Aluminiumoxid gesteuert ist, die - in Atomprozent - aus 2 bis 48 % Aluminium, 10 bis 96 % Titan und 2 bis 80 % einer Matrix, die aus Palladium, Nickel oder einer Legierung von Nickel und Palladium in allen Verhältnissen besteht, unter der Bedingung, dass der Atomprozentgehalt von Titan über dem Atomprozentgehalt von Aluminium liegt, besteht.

4. Hochschmelzende reaktive Hartlötzusammensetzung nach Anspruch 3, deren Reaktivität gegenüber Aluminiumoxid gesteuert ist, die - in Atomprozent - aus 15 bis 30 % Aluminium, 20 bis 35 % Titan und 45 bis 60 % Nickel besteht.

5. Hochschmelzende reaktive Hartlötzusammensetzung nach Anspruch 3, deren Reaktivität gegenüber Aluminiumoxid gesteuert ist, die - in Atomprozent - aus 2 bis 10 % Aluminium, 35 bis 50 % Titan und 45 bis 55 % Nickel besteht.

6. Verfahren zur Verbindung eines Teils aus einem Material auf der Basis von Aluminiumoxid mit mindestens einem anderen Teil aus einem Material auf der Basis von Aluminiumoxid und/oder mindestens einem Teil aus Metall oder einer Metalllegierung durch nicht-reaktives Hochtemperaturlöten, wobei die Teile mit einer hochschmelzenden nicht-reaktiven Hartlötzusammensetzung nach Anspruch 1 oder 2 kontaktiert und die aus den Teilen und der Hartlötzusammensetzung gebildete Einheit so auf eine ausreichende Löttemperatur erhitzt werden, dass die Hartlötzusammensetzung schmilzt, wobei eine Hochtemperaturverbindung gebildet wird.

7. Verfahren zur Verbindung eines Teils aus einem Material auf der Basis von Aluminiumoxid mit mindestens einem anderen Teil aus einem Material auf der Basis von Aluminiumoxid und/oder mindestens einem Teil aus Metall oder einer Metalllegierung durch reaktives Hochtemperaturlöten, wobei die Teile mit einer hochschmelzenden Hartlötzusammensetzung, deren Reaktivität gegenüber Aluminiumoxid gesteuert ist, nach einem der Ansprüche 3 bis 5 kontaktiert und die aus den Teilen und der Hartlötzusammensetzung gebildete Einheit so auf eine ausreichende Löttemperatur erhitzt werden, dass die Hartlötzusammensetzung schmilzt, wobei eine Hochtemperaturverbindung gebildet wird.

8. Verfahren nach Anspruch 6, wobei die Löttemperatur 1400 bis 1600 °C beträgt.

9. Verfahren nach Anspruch 7, wobei die Löttemperatur 1000 bis 1750 °C beträgt.

10. Verfahren nach Anspruch 6 oder Anspruch 7, wobei die Lötdauer 5 bis 10 Minuten beträgt.

11. Verfahren nach Anspruch 6 oder Anspruch 7, wobei ein Hartlötzusammensetzungspulver gebildet wird, dieses Pulver in einem organischen Bindemittel suspendiert wird, und die Oberflächen der zu verbindenden Abschnitte der Teile mit der erhaltenen Suspension bestrichen werden.

12. Verfahren nach Anspruch 6 oder Anspruch 7, wobei die Hartlötzusammensetzung in die Form von Metallflittern oder Bandmetall gebracht ist.

13. Verfahren nach Anspruch 11 oder Anspruch 12, wobei die Hartlötzusammensetzung zwischen die zu verbindenden Teile und/oder in deren Nähe gebracht wird.

14. Verfahren nach Anspruch 13, wobei ein Kapillarlöten durchgeführt wird.

15. Verfahren nach einem der Ansprüche 6 bis 14, wobei das Material auf der Basis von Aluminiumoxid einen Aluminiumoxidgehalt von größer als oder gleich 90 Gew.-% aufweist.

16. Verfahren nach einem der Ansprüche 6 bis 15, wobei das Material auf der Basis von Aluminiumoxid aus Saphir, gebranntem Aluminiumoxid und Komposita auf der Basis von Aluminiumoxid ausgewählt ist.

17. Verfahren nach Anspruch 16, wobei die Komposita auf der Basis von Aluminiumoxid aus den Komposita Al₂O₃/ZrO₂, den Komposita Al₂O₃/Mullit, den Komposita Al₂O₃/SiC, und den Komposita Al₂O₃/Si₃N₄ mit Al₂O₃-Matrices ausgewählt sind.

18. Verfahren nach einem der Ansprüche 6 bis 17, wobei das Metall oder die Metalllegierung aus Ti, Al, Ni, Pt, Mo, Zr und deren Legierungen ausgewählt ist.

19. Verfahren nach Anspruch 18, wobei das Metall oder die Metalllegierung aus den hochschmelzenden intermetallischen Verbindungen auf der Basis von Titan und Aluminium; Metall und Aluminium; Legierungen auf der Basis von Titan; Platin und Molybdän ausgewählt ist.

20. Verfahren nach einem der Ansprüche 6 bis 19, wobei das Löten unter Vakuum oder in der Atmosphäre eines inerten oder reduzierenden Gases durchgeführt wird.

21. Verfahren nach Anspruch 20, wobei das Gas aus Wasserstoff, Argon, Stickstoff und deren Gemischen sowie den Gemischen Argon/Wasserstoff ausgewählt ist.

22. Verbindung, die durch das Verfahren nach Anspruch 6 oder Anspruch 7 erhalten wurde.
